# EUROPÄISCHE PATENTSCHRIFT

(11) **EP 2 036 836 B1**
(45) Veröffentlichungstag und Bekanntmachung des Hinweises auf die Patenterteilung: **11.12.2013**
(21) Anmeldenummer: 08010408.6
(22) Anmeldetag: 07.06.2008
(51) Int. Cl.: B60P 3/22, F16J 13/08, B65D 90/10

(54) **Deckelvorrichtung zum Verschliessen einer Öffnung eines Behälters**
Cover device to close an opening in a container
Dispositif de couvercle destiné à la fermeture d'une ouverture d'un récipient

(30) Priorität: 13.09.2007 DE 102007045040
(43) Veröffentlichungstag der Anmeldung: 18.03.2009
(73) Patentinhaber: Spitzer Silo-Fahrzeugwerke GmbH, 74834 Elztal-Dallau (DE)
(72) Erfinder: Spitzer, Udo, 74834 Elztal (DE)
(74) Vertreter: Dreiss

(56) Entgegenhaltungen:
- EP-A- 0 816 721
- NL-A- 8 503 401

## Beschreibung

Die Erfindung betrifft eine Deckelvorrichtung zum Verschließen einer Öffnung eines Behälters gemäß dem Oberbegriff des Anspruchs 1.

Derartige Deckelvorrichtungen sind bspw. aus der DE 10 2005 045 258 A1 bekannt. Sie -werden beispielsweise zum Verschließen von Einfüllöffnungen von stationären Silobehältern oder von Behältern als Aufbauteil eines Fahrzeugs benutzt. Die Behälter besitzen eine oder mehrere Einfüllöffnungen und damit auch eine oder mehrere der Deckelvorrichtungen.

Die Silobehälter dienen vorzugsweise zur Aufnahme von staubförmigem oder körnigem Schüttgut. Dieses wird durch die Einfüllöffnungen in den Behälter eingefüllt. Nach dem Befüllen des Behälters werden die Einfüllöffnungen mittels bekannter Deckelvorrichtungen verschlossen, um das Eindringen von Fremdkörpern, Schmutz und Feuchtigkeit in den Innenraum des Behälters zu vermeiden.

Zum Entleeren sind im Bodenbereich des Behälters kegelförmige Auslaufkörper (Auslaufkegel) angeordnet, die sich nach unten auf einen engeren Querschnitt eines Anschlussstutzens für eine Förderleitung verengen. Der Behälter wird mit Druckluft beaufschlagt, um das Schüttgut über den Auslaufkörper und die Förderleitung aus dem Behälter zu befördern. Außerdem kann zur Vermeidung bzw. zum Auflösen einer Brückenbildung und zur Erhaltung der Fließfähigkeit des Schüttguts Druckluft im Bereich des Auslaufkörpers eingeblasen werden. Die druckluftunterstützte Schüttgutabfuhr setzt voraus, dass die Einfüllöffnungen des Behälters - zumindest während der Dauer der Schüttabfuhr - durch die Deckel luftdicht verschlossen sind.

Zum Verschließen solcher Behälter sind aus dem Stand der Technik Deckelvorrichtungen bekannt (sog. Domdeckel mit Knebelverschraubung), bei denen der Deckel an einer Seite der Behälteröffnung verschwenkbar angelenkt ist. Der Deckel kann entweder direkt manuell (vgl. DE 299 10 003 U1) oder indirekt ferngesteuert (vgl. DE 35 03 544 A1) betätigt werden. Zum luftdichten Verschließen des Deckels ist es bekannt, zwischen dem Deckel und dem Rand der Behälteröffnung ein Dichtelement vorzusehen. Durch mehrere Schwing- öder Knebelschrauben wird der Deckel so fest geschraubt, dass das Dichtelement zwischen der Unterseite des Deckels und dem Rand der Behälteröffnung eingespannt ist. Die Schwingschrauben sind auf dem Behälter um die Behälteröffnung herum angeordnet und können in ihrer gelösten Stellung radial nach außen, von dem Deckel weg verschwenkt werden.

Der Deckel wird bei gelösten und von dem Deckel weg verschwenkten Schwingschrauben auf die Behälteröffnung aufgesetzt. Danach werden die Schwingschrauben in Richtung des Deckels hochgeklappt, so dass sie mit entsprechenden Aufnahmebereichen in, auf oder an dem Deckel in eine lockere Verbindung treten. Anschließend werden die Schwingschrauben festgezogen, wodurch der Deckel auf den Rand der Behälteröffnung gedrückt und die Öffnung luftdicht verschlossen wird.

Die Deckelvorrichtung mit dem manuell zu betätigenden Deckel hat den Nachteil, dass das luftdichte Verschließen des Deckels mit den Schwingschrauben äußerst zeit- und arbeitsintensiv ist. Zudem erhält die Person, die das Verschließen des Deckels ausführt, keinerlei Rückmeldung, ob der Deckel richtig luftdicht verschlossen ist oder ob die Schwingschrauben vielleicht noch weiter angezogen werden müssten. Abgesehen von dem erheblichen Arbeits- und Zeitaufwand, hat die bekannte Deckelvorrichtung also auch ein Sicherheitsproblem.

Darüber hinaus sind zum Verschließen solcher Behälter aus dem Stand der Technik Deckelvorrichtungen bekannt (sog. Schiebedomdeckel), bei denen der Deckel auf Führungsschienen seitlich von der Behälteröffnung weg verschiebbar angeordnet ist. Zum luftdichten Abdichten des Deckels ist eine Dichtlippe vorgesehen, die sich bei Druckluftbeaufschlagung des Behälters im Rahmen der druckluftunterstützten Schüttgutabfuhr von innen an einen Spalt zwischen dem Deckel und dem Rand der Behälteröffnung anlegt. Somit ist der Behälter bei dieser bekannten Deckelvorrichtung nur während der Schüttgutabfuhr luftdicht abgedichtet. Es hat sich als nachteilig erwiesen, dass zu allen anderen Zeitpunkten, bspw. während des Transports oder der Lagerung des Schüttguts, Fremdkörper, Schmutz und Feuchtigkeit von außen in den Behälter eindringen und zu einer Verschmutzung und/oder Verklumpung und Brückenbildung des Schüttguts führen können.

Ferner ist aus der NL 8 503 401 A eine Deckelvorrichtung zum Verschließen einer Öffnung eines Behälters bekannt, bei der ein Deckel in einer durch die Öffnung definierten Ebene verschiebbar ist. Der Deckel ist so geführt, dass er gegen Ende der Verschiebebewegung auf die Öffnung drückt und diese so verschließt. Aus der EP 0 816 721 A1 ist eine Deckelvorrichtung zum Verschließen einer Öffnung eines Behälters bekannt, bei der ein die Öffnung verschließender Deckel mittels eines sich über den gesamten Durchmesser des Deckels erstreckenden Bügels gesichert wird. Der Bügel ist auf einer Seite des Deckels verschwenkbar an dem Behälter befestigt und wird an der diametral gegenüberliegenden Seite des Deckels mittels einer Knebelschraube an dem Behälter befestigt.

Aufgabe der Erfindung ist es, eine Deckelvorrichtung zu schaffen, die einfach in der Handhabung ist und sowohl bei mit Druck beaufschlagtem als auch bei drucklosem Behälterinnenraum zuverlässig schließt.

Zur Lösung der Aufgabe wird eine Deckelvorrichtung mit den Merkmalen des Anspruchs 1 vorgeschlagen. Insbesondere wird eine Deckelvorrichtung zum Verschließen einer Öffnung eines Behälters vorgeschlagen, wobei die Öffnung außen von einem Kragen umgeben ist, der auf einer von einem Innenraum des Behälters abgewandten Seite eine erste Auflagefläche aufweist, und die Deckelvorrichtung einen Deckel, ein an dem Deckel befestigtes Dichtelement mit einem ersten Dichtabschnitt, der bei mit dem Deckel verschlossener Öffnung zwischen der ersten Auflagefläche des Kragens und dem Deckel angeordnet ist, sowie eine Verschlussanordnung umfassend mehrere umfangsseitig um den Deckel herum angeordnete Bügel zum Einklemmen des ersten Dichtabschnitts zwischen der Auflagefläche und dem Deckel aufweist, wobei die Bügel der Verschlussanordnung jeweils einen in dem Bügel gewindegeführten Bolzen aufweisen, wobei die Bolzen bei mit dem Deckel verschlossener Öffnung durch Anziehen den die Öffnung verschließenden Deckel gegen die Auflagefläche des Kragens drücken und den ersten Dichtabschnitt des Dichtelements zwischen dem Deckel und der Auflagefläche einklemmen, und wobei das Dichtelement einen im Wesentlichen orthogonal zu dem ersten Dichtabschnitt angeordneten zweiten Dichtabschnitt aufweist, der bei Druckbeaufschlagung des Innenraums des Behälters auf einer radial nach innen gerichteten Dichtfläche des Kragens zur Auflage gelangt.

Erfindungsgemäß wurde erkannt, dass eine Deckelvorrichtung besonders einfach in der Handhabung ist, wenn verschiedenartige Dichtabschnitte vorgesehen und zu einer neuartigen, besonders effizienten Dichtung kombiniert werden, durch welche der Innenraum des Behälters unabhängig von einer Druckbeaufschlagung sicher und zuverlässig abgedichtet ist. Bei mit Druck beaufschlagtem Innenraum sorgt vor allem der erste Dichtabschnitt für eine gute Abdichtung der Deckelvorrichtung, während für den Fall des zumindest annähend drucklosen Innenraums vor allem der zweite Dichtabschnitt die Deckelvorrichtung abdichtet.

Der erste Dichtabschnitt liegt bei Druckbeaufschlagung des Innenraums des Behälters von innen an einem Spalt zwischen dem Kragen und dem Deckel an und dichtet dadurch die Deckelvorrichtung selbst bei hohen Drücken zuverlässig ab. Durch den Druck im Inneren des Behälters wird der erste Dichtabschnitt fest von innen gegen den Spalt gedrückt und dichtet diesen ab. Dies gilt auch dann, wenn sich ein Abstand zwischen dem Kragen und dem Deckel auf Grund der Druckbeaufschlagung des Innenraums geringfügig vergrößern sollte. Daher muss beim Anbringen des Deckels am Kragen nicht besonders auf einen besonders hohen Anpressdruck des Deckels gegen den Kragen geachtet werden, wodurch die Handhabbarkeit der Deckelvorrichtung vereinfacht ist.

Bei zumindest annähernd drucklosem Innenraum des Behälters sorgt der zweite Dichtabschnitt für eine Abdichtung der Deckelvorrichtung. Der zweite Dichtabschnitt wirkt im Gegensatz zum ersten Dichtabschnitt auf Grund eines Anpressens des Deckels auf den Kragen vorzugsweise auf die Stirnseite des Kragens des Behälters. Da beim zumindest annähernd drucklosem Innenraum höchstens eine geringfügige Druckkraft auf die Innenseite des Deckels wirkt, bedarf es beim Anbringen des Deckels an dem Kragen keiner besonderen Vorkehrungen um sicherzustellen, dass der Deckel hinreichend stark auf den Kragen gepresst wird. Die Verschlussanordnung braucht deshalb keine langen, hebelartigen Betätigungselemente zum starken Festziehen der Verschlussanordnung aufzuweisen. Insgesamt wird bei der erfindungsgemäßen Deckelvorrichtung sowohl ein Entweichen des Drucks aus dem Behälter (durch den ersten Dichtabschnitt) als auch ein Eindringen von Fremdkörpern, Schmutz oder Feuchtigkeit in den drucklosen Innenraum (durch den zweiten Dichtabschnitt) zuverlässig vermieden. Dennoch ist die Deckelvorrichtung einfach zu handhaben.

Hierbei weist die Deckelvorrichtung ein Dichtelement auf, das den ersten Dichtabschnitt und den zweiten Dichtabschnitt umfasst. Dadurch werden die beiden Dichtabschnitte zu einem einzigen Bauteil kombiniert, was eine einfache Herstellung der Deckelvorrichtung erlaubt und zu einer noch einfacheren Handhabbarkeit derselben führt. Das Dichtelement ist vorzugsweise als eine ringförmige Dichtlippe ausgebildet. Es kann aus Gummi oder Kunststoff bestehen.

Um die Zuverlässigkeit der Abdichtung der Deckelvorrichtung weiter zu erhöhen, kann vorgesehen werden, dass der erste Dichtabschnitt und der zweite Dichtabschnitt bei geöffneter Deckelvorrichtung zumindest annähernd orthogonal zueinander angeordnet sind und/oder dass eine Länge des ersten Dichtabschnitts größer ist als eine Dicke des zweiten Dichtabschnitts. Der zweite Dichtabschnitt ragt in den Spalt zwischen dem Kragen und dem Deckel hinein und wird beim Schließen des Deckels zwischen diesen beiden Teilen eingeklemmt und erstreckt sich somit vorzugsweise in radialer Richtung im Wesentlichen in dem Spalt zwischen Deckel und dem die Öffnung umgebenden Kragen angeordnet. Dahingegen erstreckt sich der erste Dichtabschnitt, vorzugsweise in axialer Richtung und liegt im Wesentlichen orthogonal zum Spalt an der Innenseite des Kragens an. Durch die orthogonale Anordnung der beiden Dichtabschnitte des Dichtelements zueinander wird erreicht, dass der erste Dichtabschnitt beim Verschließen des Behälters zuverlässig am Spalt zwischen Kragen und Deckel in einer bezüglich der Öffnung axialen Richtung positioniert wird. Des Weiteren wird ein Verrutschen des ersten Dichtabschnitts bei verschlossener Deckelvorrichtung vermieden. Der zweite Dichtabschnitt dient somit nicht nur zum Abdichten der Deckelvorrichtung bei drucklosem Innenraum, sondern auch zur optimalen Positionierung des ersten Dichtabschnitts am Spalt zwischen dem Kragen und dem Deckel. Darüber hinaus wird dadurch, dass die Länge des ersten Dichtabschnitts größer ist als die Dicke des zweiten Dichtabschnitts auch eine besonders zuverlässige Positionierung des zweiten Dichtabschnitts in radialer Richtung bezüglich des Kragens erreicht, indem vermieden wird, dass der zweite Dichtabschnitt sich in radialer Richtung nach außen aus dem Spalt zwischen Kragen und Deckel hinaus bewegt.

Um die Handhabbarkeit der Deckelvorrichtung weiter zu verbessern, ist besonders bevorzugt, dass das Dichtelement und/oder mindestens einer der beiden Dichtabschnitte, vorzugsweise der erste Dichtabschnitt, einen Verankerungsabschnitt und/oder dass der Deckel einen Aufnahmeabschnitt zur Aufnahme des Verankerungsabschnitts aufweist. Mit Hilfe des Verankerungsabschnitts des Dichtelements beziehungsweise einer der beiden Dichtabschnitte und des Aufnahmeabschnitts kann das Dichtelement beziehungsweise können die Dichtabschnitte an dem Deckel angebracht und befestigt werden. Wird der Deckel auf den Kragen der Öffnung aufgesetzt, dann kommen die Dichtabschnitte automatisch an den vorgesehenen Bereichen zur Auflage. Das heißt, der erste Dichtabschnitt kommt an dem Spalt zwischen dem Kragen und dem Deckel zu liegen, während der zweite Dichtabschnitt im Spalt zwischen dem Kragen und dem Deckel eingeklemmt wird. Beim Verschließen der Deckelvorrichtung muss also nicht gezielt auf die korrekte Positionierung des Dichtelements beziehungsweise der beiden Dichtabschnitt geachtet werden.

Eine besonders einfach realisierbare und dennoch wirksame Verankerung des Dichtelements beziehungsweise der beiden Dichtabschnitte an dem Deckel kann dadurch erreicht werden, dass der Aufnahmeabschnitt des Deckels eine sich im Querschnitt in Richtung des Innenraums des Behälters verjüngende Form, vorzugsweise eine Trapezform, aufweist und/oder dass der Verankerungsabschnitt eine entsprechende sich in Richtung des Innenraums des Behälters verjüngende Gegenform aufweist. Wird dabei der Verankerungsabschnitt einstückig mit dem Dichtelement beziehungsweise einem der Dichtabschnitte ausgeführt und der Aufnahmeabschnitt durch eine Ausnehmung, vorzugsweise eine Ringnut, an einer dem Innenraum des Behälters zugewandten Seite des Deckels gebildet, so werden zum Verankern des Dichtelements beziehungsweise der Dichtabschnitte am Deckel keine zusätzlichen Bauteile benötigt. Dies ermöglicht die Realisierung einer besonders einfachen, kostengünstigen und zuverlässigen Deckelvorrichtung.

Gemäß einer bevorzugten Ausführungsform der Erfindung wird vorgeschlagen, dass die Verschlussanordnung mindestens ein mit dem Behälter fest verbundenes Verschlusselement zur Befestigung des Deckels an der Öffnung und zum Einklemmen des zweiten Dichtabschnitts zwischen dem Kragen und dem Deckel aufweist. Mit einer solchen Verschlussanordnung kann der Deckel auf einfache Weise am Kragen der Öffnung des Behälters befestigt werden und auch einfach wieder abgenommen werden, weil sich die Verschlusselemente an dem Behälter und nicht am Deckel befinden und somit eine Bewegung des Deckels zum Öffnen der Deckelvorrichtung nicht erschweren. Die Verschlussanordnung muss so gebildet sein, dass sie den im Innenraum des Behälters herrschenden Druckkräften entgegenwirken kann und den Deckel entgegen der Druckkräfte auf dem Kragen der Öffnung halten kann. Es ist jedoch nicht erforderlich, dass ein Abstand zwischen dem Kragen und dem Deckel, das heißt eine Breite des Spalts zwischen dem Kragen und dem Deckel bei Druckbeaufschlagung des Innenraums konstant bleibt. Denn die Wirksamkeit des ersten Dichtabschnitts hängt nicht davon ab, dass der Spalt zwischen dem Kragen und dem Deckel eine konstante Breite oder eine möglichst geringe Breite aufweist. Deshalb kann die erfindungsgemäße Deckelvorrichtung eine Verschlussanordnung aufweisen, bei deren Konstruktion eine einfache Handhabbarkeit und nicht eine möglichst große Anpresskraft des Deckels gegen den Kragen im Vordergrund steht.

Ein Verschlusselement, das einfach in der Handhabung ist, kann man gemäß einer Weiterbildung der Erfindung dadurch erhalten, dass das Verschlusselement einen von der Öffnung wegschwenkbaren Bügel und einen bei an der Öffnung befestigtem Deckel mit dem Deckel zusammenwirkenden Bolzenabschnitt aufweist. Bei geschlossener Deckelvorrichtung ist der Bügel in Richtung des Kragens geschwenkt, und der Bolzenabschnitt drückt gegen eine Außenseite des Deckels und bewirkt somit, dass der Deckel von außen gegen den Kragen der Öffnung gedrückt wird. Zum Öffnen der Deckelvorrichtung wird der Bolzen von der Außenseite des Deckels weg bewegt und der Bügel in radialer Richtung von dem Kragen nach außen weg geschwenkt, so dass der Deckel von dem Kragen der Öffnung entfernt werden kann.

Vorzugsweise wird das Verschlusselement als Verschraubung ausgeführt, indem vorgesehen wird, dass der Bolzenabschnitt des Verschlusselements einen Außengewindeabschnitt und der Bügel des Verschlusselements einen Innengewindeabschnitt aufweist, wobei sich der Außengewindeabschnitt des Bolzenabschnitts mit dem Innengewindeabschnitt des Bügels in Eingriff befindet. Ist der Deckel auf dem Kragen der Öffnung aufgesetzt und der Bügel radial nach innen in Richtung des Kragens verschwenkt, kann der Bolzenabschnitt durch eine Drehung des Bolzens relativ zum Bügel gegen die Außenseite des Deckels gedrückt werden. Um die Drehung einfach, insbesondere ohne Werkzeug, vornehmen zu können, kann der Bolzenabschnitt an einer von der Außenseite des Deckels abgewandten Seite einen Betätigungsknauf aufweisen. Da eine geringfügige Nachgiebigkeit des Verschlusselements bei Druckbeaufschlagung des Innenraums für die Dichtheit der Deckelvorrichtung unkritisch ist, braucht die Verschraubung nicht besonders fest angezogen werden. Es genügt also ein einfacher Handknauf; hebelartige Betätigungselemente brauchen nicht vorgesehen zu werden. Darüber hinaus können das Innengewinde und das Außengewinde beispielsweise durch einen entsprechende Auslegung einer Steigung der Gewindeabschnitte derart gebildet werden, dass wenige, vorzugsweise ein bis drei, Umdrehungen ausreichen, um den Bolzenabschnitt auf die Außenseite des Deckels zu drücken beziehungsweise wieder so weit von diesem zu entfernen, dass der Bügel radial nach außen von dem Kragen der Öffnung weg geschwenkt werden kann.

Ein besonders einfacher Aufbau der Deckelvorrichtung ergibt sich bei einer geringen Teilezahl. Eine besonders gute Dichtwirkung der beiden Dichtabschnitte beziehungsweise des Dichtelements ergibt sich, wenn diese elastisch sind. Daher ist bevorzugt, dass das Dichtelement einstückig mit seinem Dichtabschnitt ausgebildet ist und/oder aus Gummi, elastischem Kunststoff oder Kunstgummi, insbesondere einem Elastomer gebildet ist. Für den Fall, dass kein vorzugsweise einstückiges Dichtelement, sondern getrennte Dichtabschnitte vorgesehen werden, ist es ebenso vorteilhaft, den ersten und/oder den zweiten Dichtabschnitt aus den oben genannten Materialien zu bilden, wobei die Dichtabschnitte auch aus unterschiedlichen Materialien bestehen können.

Weitere vorteilhafte Ausgestaltungen und Einzelheiten der Erfindung sind der folgenden Beschreibung zu entnehmen in der die Erfindung anhand in der Zeichnung dargestellter exemplarischen Ausführungsformen näher beschrieben und erläutert ist. Dabei zeigen:
- Figur 1: eine Draufsicht auf eine geschlossene Deckelvorrichtung gemäß einer ersten bevorzugten Ausführungsform der vorliegenden Erfindung;
- Figur 2: die Deckelvorrichtung aus Figur 1 teilweise im Schnitt entlang der Linie II-II aus Figur 1;
- Figur 3: eine vergrößerte Darstellung eines Details aus Figur 2;
- Figur 4: eine geschnittene Seitenansicht eines Dichtelements der Deckelvorrichtung;
- Figur 5: eine teilweise geschnittene Vorderansicht eines Verschlusselements; und
- Figur 6: die Deckelvorrichtung aus Figur 1 teilweise im Schnitt entlang der Linie VI-VI aus Figur 1.

Gleiche Elemente tragen in den verschiedenen Figuren dieselben Bezugszeichen und werden in der nachfolgenden Beschreibung in der Regel nur einmal im Detail erläutert.

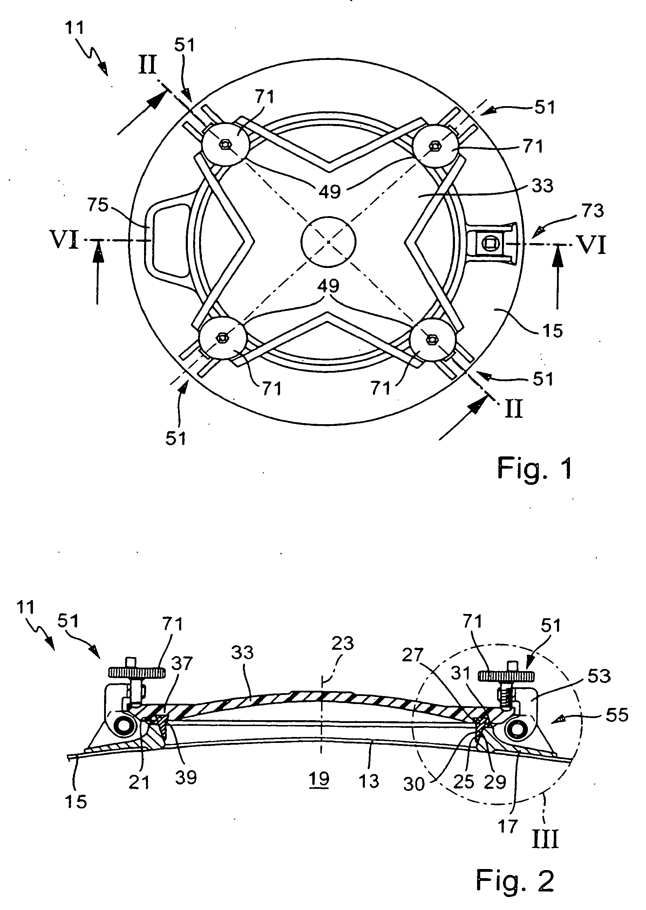

In den Figuren 1 und 2 ist eine erfindungsgemäße Deckelvorrichtung 11 in ihrer Gesamtheit dargestellt. Die Deckelvorrichtung 11 ist auf einer Öffnung 13 eines Behälters 15 angebracht. Bei dem Behälter kann es sich beispielsweise um einen Silobehälter, insbesondere zum Transport von Schüttgut, handeln, der auf einem Silofahrzeug montiert ist. Die Deckelvorrichtung 11 kann jedoch auch an andere Behälterarten zum Verschließen einer Öffnung 13 in dem Behälter angebracht werden.

Die Öffnung 13 ist von einem Kragen 17 umgeben. Sowohl die Öffnung 13 als auch der Kragen 17 weisen von oben betrachtet eine Kreisform auf. Die Erfindung ist jedoch auch für eine Öffnung 13 oder einen Kragen 17 anwendbar, die eine von der Kreisform abweichende Form aufweisen. Der Kragen 17 ist an seiner von einem Innenraum 19 des Behälters 15 abgewandten Seite von einer ersten Auflagefläche 21 begrenzt, die wie in der gezeigten Ausführungsform orthogonal zu einer Mittelachse 23 der Öffnung 13 angeordnet sein kann.

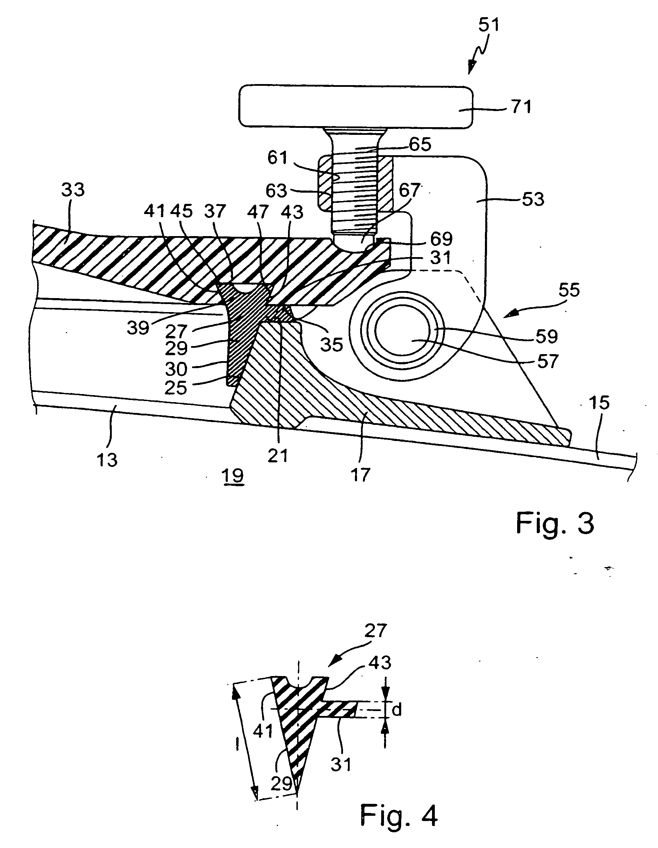

Wie in Figur 3 gezeigt, weist der Kragen 17 außerdem eine Dichtfläche 25 auf, welche den Kragen 17 in etwa radial nach innen zur Öffnung 13 hin begrenzt. In dem dargestellten Ausführungsbeispiel ist die Dichtfläche 25 bezüglich der Mittelachse 23 und dem Innenraum 19 vom Behälterinneren nach außen hin betrachtet leicht schräg nach radial außen geneigt. Die lichte Weite der Öffnung 13 vergrößert sich also von innen nach außen. An dem Kragen 17 liegt ein Dichtelement 27 an. Das Dichtelement 27 umfasst einen ersten Dichtabschnitt 29 mit einer dem Innenraum 19 des Behälters 15 zugewandten Innenfläche 30, der auf der Dichtfläche 25 des Kragens 17 aufliegt, und einen zweiten Dichtabschnitt 31, der auf der ersten Auflagefläche 21 aufliegt. Wegen der Kreisform der Öffnung 13 sowie des Kragens 17 weist auch das Dichtelement 27 mit seinen beiden Dichtabschnitten 29, 31 von oben betrachtet eine Kreisringform auf.

Auf dem zweiten Dichtabschnitt 31 des Dichtelements 27 liegt ein Deckel 33 mit einer zweiten Auflagefläche 35 auf, die an einer dem Innenraum 19 zugewandten Seite des Deckels 33 angeordnet ist. Der zweite Dichtabschnitt 31 ist also zwischen der ersten Auflagefläche 21 des Kragens 17 und der zweiten Auflagefläche 35 des Deckels 33 eingeklemmt. Der Deckel 33 weist neben seiner zweiten Auflagefläche 35 einen Aufnahmeabschnitt 37 auf. Im Aufnahmeabschnitt 37 ist ein Verankerungsabschnitt 39 des Dichtelements 27 aufgenommen und verliersicher gehalten.

Von oben betrachtet hat der Aufnahmeabschnitt 37 eine Kreisringform, die der Kreisringform des Dichtelements 27 im Wesentlichen entspricht. Im Querschnitt (siehe beispielsweise Figur 3 oder 4) hat der Aufnahmeabschnitt 37 eine Trapezform, das heißt er weist eine erste Aufnahmefläche 41 und eine zweite Aufnahmefläche 43 auf, wobei die beiden Aufnahmeflächen 41, 43 zum Innenraum 19 des Behälters 15 hin aufeinander zu laufen. Der Verankerungsabschnitt 39 des Dichtelements 27 weist eine erste Verankerungsfläche 45 und eine zweite Verankerungsfläche 47 auf. Der Verankerungsabschnitt 39 des Dichtelements 27 ist derart im Aufnahmeabschnitt 37 des Deckels 33 aufgenommen, dass die erste Aufnahmefläche 41 auf der ersten Verankerungsfläche 45 und die zweite Aufnahmefläche 43 auf der zweiten Verankerungsfläche 47 anliegt.

Die erfindungsgemäße Deckelvorrichtung 11 weist eine Verschlussanordnung 49 auf, die ihrerseits vier Verschlusselemente 51 umfasst. In anderen, nicht gezeigten Ausführungsformen ist eine andere Anzahl an Verschlusselementen 51 vorgesehen. Die optimale Anzahl an Verschlusselementen 51 hängt insbesondere von konstruktiven Details einer konkreten Ausführungsform wie beispielsweise ein Durchmesser der Öffnung 13 ab. Ein jedes Verschlusselement 51 umfasst einen vorzugsweise U-förmigen Bügel 53, der mittels eines Scharniers 55 in radialer Richtung relativ zur Öffnung 13 verschwenkbar ist. Das Scharnier 55 ist von einer Achse 57, die fest mit dem Behälter 15 verbunden ist, und einer am Bügel 53 vorhandenen Öse 59 zur Aufnahme der Achse 57 gebildet.

An einem von der Öse 59 abgewandten Ende weist der Bügel 53 eine Bohrung mit einem Innengewindeabschnitt 61 auf. Der Innengewindeabschnitt 61 steht in Eingriff mit einem Außengewindeabschnitt 63 eines Bolzens 65. An seinem (vorderen in Figur 3 unteren), dem Deckel 33 zugewandten Ende weist der Bolzen 65 des Verschlusselements 51 einen balligen Druckabschnitt 67 auf. Der Druckabschnitt 67 des Verschlusselements 51 drückt bei geschlossenem Deckel 33 gegen eine Vertiefung 69, die in einem äußeren Rand des Deckels 33 eingeformt ist. An einer vom Deckel 33 abgewandten Seite weist der Bolzen 65 zur einfacheren Betätigung einen Drehknauf 71 auf, der drehfest mit dem Bolzen 65 verbunden ist.

Das Dichtelement 27 ist einstückig aus einem elastischen Material, vorzugsweise Gummi gebildet. Es kann jedoch auch aus einem elastischen Kunststoff, Kunstgummi oder Elastomer gebildet sein. Figur 4 zeigt einen Querschnitt durch das Dichtelement 27 in einem Ruhezustand, das heißt wenn keine äußeren Kräfte auf es einwirken. Man erkennt, dass der erste Dichtabschnitt 29 im Wesentlichen orthogonal zum zweiten Dichtabschnitt 31 angeordnet ist. Ferner ist eine Länge 1 des ersten Dichtabschnitts 29 deutlich größer als eine Dicke d des zweiten Dichtabschnitts 31.

Um das Öffnen und Schließen des Deckels 33 zu erleichtern, kann wie in Figur 1 gezeigt, ein Deckelscharnier 73 vorgesehen werden, das den Deckel 33 mit dem Behälter 15 verbindet, so dass der Deckel 33 relativ zu der Öffnung 13 verschwenkbar ist. Außerdem kann am Deckel 33, vorzugsweise an der dem Deckelscharnier 73 gegenüberliegenden Seite des Deckels 33, ein Handgriff 75 angeordnet sein.

Selbstverständlich kann der Deckel 33 auch andere Mittel aufweisen, um eine Öffnen und Schließen des Deckels 33 zu erleichtern, bspw. Mittel zum Verschieben des Deckels 33 in etwa parallel zur Oberfläche des Behälters 15 oder Mittel zum Verschwenken des Deckels 33 um eine im wesentlichen vertikale Schwenkachse.

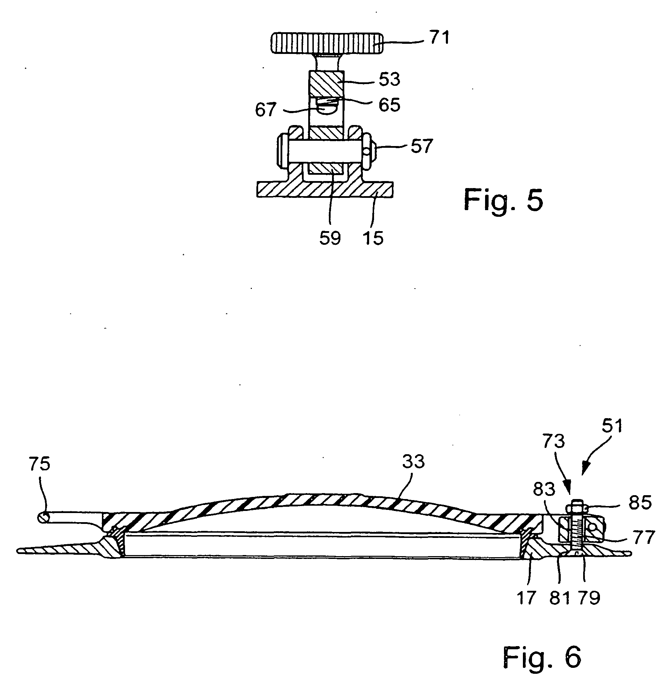

Figur 6 zeigt einen Schnitt durch den Deckel 33 entlang der Linie VI-VI aus Figur 1. Deutlich zu erkennen ist das Deckelscharnier 73 zum Öffnen und Schließen des Deckels 33. Selbstverständlich wäre es auch denkbar, das Verschlusselement 51 entsprechend dem Scharnier 73 auszubilden. In einer solchen Ausführungsform könnte das Verschlusselement 51 eine Schraube 77 aufweisen, die an einem dem Behälter 15 zugewandten Ende einen Senkkopf 79 aufweist. Die Schraube 77 würde in ein Loch 81 des Kragens 17 ragen, wobei sie an dem Senkkopf 79 von dem Loch 81 aufgenommen wird. Die Schraube 77 könnte außerdem durch ein Befestigungsloch 83 des Deckels 33 ragen, und eine Mutter 85 könnte an der Schraube 77 angeschraubt sein, wodurch der Deckel 33 gegen den Kragen 17 gedrückt würde. In einer nicht gezeigten Ausführungsform weist die Mutter 85 einen Drehknauf 71 auf, der drehfest mit ihr verbunden ist (z. B. nach Art einer Flügelmutter). Zusätzlich zu den Verschlusselementen 52 gemäß der beschriebenen zweiten Ausführungsform weist der Deckel 33 das Deckelscharnier 73 sowie den Handgriff 75 oder andere Mittel zum Öffnen und Schließen des Deckels 33 auf.

Im Folgenden wird die Funktionsweise der Deckelvorrichtung 11 erläutert. Zum Verschließen der Deckelvorrichtung 11 wird der Deckel 33 auf den Kragen 17 der Öffnung 13 aufgesetzt beziehungsweise mittels des Deckelscharniers 73 aufgeschwenkt. Anschließend wird der Bügel 53 eines jeden Verschlusselements 51 der Verschlussanordnung 49 zum Deckel 33 hin geschwenkt, so dass sich der Druckabschnitt 67 des Bolzens 65 eines jeden Verschlusselements und die Vertiefung 69 des Deckels 33 gegenüber zu liegen kommen. Danach wird der Bolzen 65 mittels des Drehknaufs 71 mit einigen wenigen Umdrehungen angezogen, so dass der Druckabschnitt 67 den Deckel 33 an der Vertiefung 69 auf den Kragen 17 der Öffnung 13 drückt.

Der Innengewindeabschnitt 61 des Bügels 53 und der Außengewindeabschnitt 63 des Bolzens 65 sind insbesondere durch eine Wahl einer entsprechend großen Steigung ihrer Gewinde so ausgelegt, dass die Verschlusselemente 51 mittels weniger, vorzugsweise ein bis drei Umdrehungen des Bolzens 65 angezogen werden können. Eine Anpresskraft des Deckels 33 gegen den Kragen 17 der Öffnung 13 ist bei zumindest annähernd drucklosem Innenraum 19 relativ gering; sie muss in diesem Fall gerade ausreichen, um den zweiten Dichtabschnitt 31 etwas zusammen zu drücken. Wegen der relativ geringen Anpresskraft des Deckels 33 gegen den Kragen 17 bei zumindest annähernd drucklosem Innenraum 19 können die Befestigungselemente trotz der relativ großen Steigung ihrer Gewindeabschnitte 61, 33 leicht angezogen werden.

Da das Dichtelement 27 mittels seines Verankerungsabschnitts 39 fest über den Aufnahmeabschnitt 37 mit dem Deckel 33 verbunden ist, ist sichergestellt, dass beim Schließen der Deckelvorrichtung 11 der zweite Dichtabschnitt 31 des Dichtelements 27 zwischen der ersten Auflagefläche 21 des Kragen 17 und der zweiten Auflagefläche 35 des Deckels 33 zu liegen kommt. Gleichzeitig wird beim Aufsetzen des Deckels 33 auf den Kragen 17 der Öffnung 13 der erste Dichtabschnitt 29 wie beispielsweise in Figur 2 gezeigt elastisch nach innen gebogen, so dass sich bereits bei druckfreiem Innenraum 19 eine relativ geringe Flächenpressung des ersten Dichtabschnitts 29 gegen die Dichtfläche 25 ergibt.

Dadurch, dass die Bolzen 65 der Verschlusselemente 51 angezogen wurden, wird der zweite Dichtabschnitt 31 des Dichtelements 27 von den beiden Auflageflächen 21, 35 zusammengepresst, wodurch der zweite Dichtabschnitt 31 sich elastisch verformt. Dadurch wird eine Dichtwirkung erreicht, die bei dem zumindest annähernd drucklosen Innenraum 19 des Behälters 15 ein Eindringen von Fremdkörpern aus der Umgebung in den Innenraum 19 verhindert.

Der Bolzen 65 eines jeden Verschlusselements 51 braucht nur so weit beziehungsweise so stark angezogen zu werden, dass die Dichtwirkung des zweiten Dichtabschnitts 31 ausreicht, um einen zumindest annähernd drucklosen Innenraum 19 des Behälters 15 wirksam abzudichten. Sobald der Innenraum 19 mit einem Druck beaufschlagt ist wird die Dichtwirkung des zweiten Dichtabschnitts 31 durch eine Dichtwirkung des ersten Dichtabschnitts 29 ergänzt. Denn auf Grund des Drucks im Innenraum 19, der auf die Innenfläche 30 des ersten Dichtabschnitts 29 einwirkt und den ersten Dichtabschnitt 29 dadurch bezüglich der Mittelachse 23 nach außen drückt, werden der erste Dichtabschnitt 29 und die Dichtfläche 25 des Kragens 17 gegeneinander gedrückt. Folglich dichtet der erste Dichtabschnitt 29 des Dichtelements 27 den Spalt zwischen dem Kragen 17 und dem Deckel 33 ab. Die Dichtwirkung des ersten Dichtabschnitts 29 beruht also auf dem Druck im Innenraum 19 des Behälters 15 und ist nicht von der Kraft abhängig, mit dem die Verschlusselemente 51 den Deckel 33 gegen den Kragen 17 drücken.

## Patentansprüche

1. Deckelvorrichtung (11) zum Verschließen einer Öffnung (13) eines Behälters (15), wobei die Öffnung (13) außen von einem Kragen (17) umgeben ist, der auf einer von einem Innenraum (19) des Behälters (15) abgewandten Seite eine erste Auflagefläche (21) aufweist, und die Deckelvorrichtung (11) einen Deckel (33), ein an dem Deckel (33) befestigtes Dichtelement (27) mit einem ersten Dichtabschnitt (31), der bei mit dem Deckel (33) verschlossener Öffnung (13) zwischen der ersten Auflagefläche (21) des Kragens (17) und dem Deckel (33) angeordnet ist, sowie eine Verschlussanordnung (49) umfassend mehrere umfangsseitig um den Deckel (33) herum angeordnete Bügel (53) zum Einklemmen des ersten Dichtabschnitts (31) zwischen der Auflagefläche (21) und dem Deckel (33) aufweist, **dadurch gekennzeichnet, dass** die Bügel (53) der Verschlussanordnung (49) jeweils einen in dem Bügel (53) gewindegeführten Bolzen (65) aufweisen, wobei die Bolzen (65) bei mit dem Deckel (33) verschlossener Öffnung (13) durch Anziehen den die Öffnung (13) verschließenden Deckel (33) gegen die Auflagefläche (21) des Kragens (17) drücken und den ersten Dichtabschnitt (31) des Dichtelements (27) zwischen dem Deckel (33) und der Auflagefläche (21) einklemmen, und dass das Dichtelement (27) einen im Wesentlichen orthogonal zu dem ersten Dichtabschnitt (31) angeordneten zweiten Dichtabschnitt (29) aufweist, der bei Druckbeaufschlagung des Innenraums (19) des Behälters (15) auf einer radial nach innen gerichteten Dichtfläche (25) des Kragens (17) zur Auflage gelangt.

2. Deckelvorrichtung (11) nach Anspruch 1, **dadurch gekennzeichnet, dass** der erste Dichtabschnitt (29) und der zweite Dichtabschnitt (31) bei geöffneter Deckelvorrichtung (11) zumindest annähernd orthogonal zueinander angeordnet sind und/oder dass eine Länge (1) des ersten Dichtabschnitts (31) größer ist als eine Dicke (d) des zweiten Dichtabschnitts (29).

3. Deckelvorrichtung (11) nach Anspruch 1 oder 2, **dadurch gekennzeichnet, dass** das Dichtelement (27) und/oder mindestens einer der beiden Dichtabschnitte (29, 31) einen Verankerungsabschnitt (39) und dass der Deckel (33) einen Aufnahmeabschnitt (37) zur Aufnahme des Verankerungsabschnitts (39) aufweist.

4. Deckelvorrichtung (11) nach Anspruch 3, **dadurch gekennzeichnet, dass** der Aufnahmeabschnitt (37) des Deckels (33) eine sich im Querschnitt in Richtung des Innenraums (19) des Behälters (15) verjüngende Form, vorzugsweise eine Trapezform, aufweist und/oder dass der Verankerungsabschnitt (39) eine entsprechende, sich in Richtung des Innenraums (19) des Behälters (15) verjüngende Gegenform aufweist.

5. Deckelvorrichtung (11) nach einem der vorherigen Ansprüche, **dadurch gekennzeichnet, dass** die Verschlussanordnung (49) mindestens ein mit dem Behälter (15) fest verbundenes Verschlusselement (51) zur Befestigung des Deckels (33) an der Öffnung (13) und zum Einklemmen des zweiten Dichtabschnitts (31) zwischen dem Kragen (17) und dem Deckel (33) aufweist.

6. Deckelvorrichtung (11) nach Anspruch 5, **dadurch gekennzeichnet, dass** das Verschlusselement (51) einen von der Öffnung (13) wegschwenkbaren Bügel (53) und einen bei an der Öffnung (13) befestigten Deckel (33) mit dem Deckel (33) zusammenwirkenden Bolzenabschnitt (65) aufweist.

7. Deckelvorrichtung (11) nach Anspruch 6, **dadurch gekennzeichnet, dass** der Bolzenabschnitt (65) des Verschlusselements (51) einen Außengewindeabschnitt (63) und der Bügel (53) des Verschlusselements (51) einen Innengewindeabschnitt (61) aufweist, wobei sich der Außengewindeabschnitt (63) des Bolzenabschnitts (65) mit dem Innengewindeabschnitt (61) des Bügels (53) in Eingriff befindet.

8. Deckelvorrichtung (11) nach einem der Ansprüche 2 bis 7, **dadurch gekennzeichnet, dass** das Dichteelement (27) einstückig mit seinen Dichtabschnitten (29, 31) ausgebildet ist.

9. Deckelvorrichtung (11) nach einem der Ansprüche 2 bis 8, **dadurch gekennzeichnet, dass** das Dichteelement (27) aus Gummi, elastischem Kunststoff oder Kunstgummi, insbesondere einem Elastomer, gebildet ist.

## Claims

1. Cover arrangement (11) to close an opening (13) in a container (15), the opening (13) being surrounded on the outside by a collar (17) which has a first supporting surface (21) on a side remote from the interior (19) of the container (15), and the cover arrangement (11) having a cover (33), having a sealing member (27) attached to the cover (33) which has a first sealing portion (31) which is arranged between the cover (33) and the first supporting surface (21) of the collar (17) when the opening (13) is closed by the cover (33), and having a closure arrangement (49) which comprises a plurality of clamps (53) arranged circumferentially around the cover (33) for clamping the first sealing portion (31) into place between the supporting surface (21) and the cover (33), **characterised in that** the clamps (53) of the closure arrangement (49) each have a pin (65) which is guided in the clamp (53) in a thread, the pins (65), when the opening (13) is closed by the cover (33), pressing the cover (33) which is closing the opening (13) against the supporting surface (21) of the collar (17) and clamping the first sealing portion (31) of the sealing member (27) into place between the cover (33) and the supporting surface (21), as a result of being tightened, and **in that** the sealing member (27) has a second sealing portion (29), arranged substantially orthogonally to the first sealing portion (31), which comes to bear against a radially inwardly directed sealing surface (25) on the collar (17) when pressure is applied to the interior (19) of the container (15).

2. Cover arrangement (11) according to claim 1, **characterised in that** the first sealing portion (29) and the second sealing portion (31) are arranged at least approximately orthogonally to one another when the cover arrangement (11) is open, and/or **in that** the length (1) of the first sealing portion (31) is greater than the thickness (d) of the second sealing portion (29).

3. Cover arrangement (11) according to claim 1 or 2, **characterised in that** the sealing member (27), and/or at least one of the two sealing portions (29, 31), has an anchoring portion (39), and **in that** the cover (33) has a receiving portion (37) to receive the anchoring portion (39).

4. Cover arrangement (11) according to claim 3, **characterised in that** the receiving portion (37) of the cover (33) is of a shape, preferably a trapezoidal shape, which tapers in cross-section in the direction of the interior (19) of the container (15), and/or **in that** the anchoring portion (39) is of a corresponding mating shape which tapers in the direction of the interior (19) of the container (15).

5. Cover arrangement (11) according to one of the preceding claims, **characterised in that** the closure arrangement (49) has at least one closure member (51), solidly connected to the container (15), for fastening the cover (33) to the opening (13) and for clamping the second sealing portion (31) into place between the collar (17) and the cover (33).

6. Cover arrangement (11) according to claim 5, **characterised in that** the closure member (51) has a clamp (53) which can be swung away from the opening (13) and a pin part (65) which co-operates with the cover (33) when the cover (33) is fastened to the opening (13).

7. Cover arrangement (11) according to claim 6, **characterised in that** the pin part (65) of the closure member (51) has an externally threaded portion (63) and the clamp (53) of the closure member (51) has an internally threaded portion (61), the externally threaded portion (63) of the pin part (65) being in engagement with the internally threaded portion (61) of the clamp (53).

8. Cover arrangement (11) according to one of claims 2 to 7, **characterised in that** the sealing member (27) is formed in one piece with its sealing portions (29, 31).

9. Cover arrangement (11) according to one of claims 2 to 8, **characterised in that** the sealing member (27) is formed from rubber, elastic plastics material or synthetic rubber, and in particular from an elastomer.

## Revendications

1. Dispositif de couvercle (11) pour fermer une ouverture (13) d'un récipient (15), cette ouverture (13) étant entourée à sa partie externe par une collerette (17) qui comporte sur sa face située à l'opposé du volume interne (19) du récipient (15) une première surface d'appui (21), et le dispositif de couvercle (11) comportant un couvercle (33), un élément d'étanchéité (27) fixé à ce couvercle (33) et muni d'une première partie d'étanchéité (31) qui est située lorsque l'ouverture (13) est fermée par le couvercle (33) entre la première surface d'appui (21) de la collerette (17) et le couvercle (33), ainsi qu'un dispositif de fermeture (49) comportant plusieurs étriers (53) répartis sur la périphérie du couvercle (33) pour permettre de bloquer la première partie d'étanchéité (31) entre la surface d'appui (21) et le couvercle (33),
**caractérisé en ce que**
les étriers (53) du dispositif de fermeture (49) comportent chacun un boulon (65) introduit par vissage dans cet étrier (53), lorsque l'ouverture (13) est fermée par le couvercle (33), les boulons (65) comprimant par serrage, ce couvercle (33) fermant cette ouverture (13) contre la surface d'appui (21) de la collerette (17) et bloquant la première partie d'étanchéité (31) de l'élément d'étanchéité (27) entre le couvercle (33) et la surface d'appui (21), et
**en ce que**
l'élément d'étanchéité (27) comporte une seconde partie d'étanchéité (29) essentiellement orthogonale à la première partie d'étanchéité (31) et qui, lors d'une mise sous pression du volume interne (19) du récipient (15) vient en appui contre une surface d'étanchéité radiale dirigée vers l'intérieur (25) de la collerette (17).

2. Dispositif de couvercle (11) conforme à la revendication 1,
**caractérisé en ce que**
lorsque le dispositif de couvercle (11) est ouvert la première partie d'étanchéité (29) et la seconde partie d'étanchéité (31) sont au moins approximativement orthogonales et/ou la longueur (1) de la première partie d'étanchéité (31) est supérieure à l'épaisseur (d) de la seconde partie d'étanchéité (29).

3. Dispositif de couvercle (11) conforme à la revendication 1 ou 2,
**caractérisé en ce que**
l'élément d'étanchéité (27) et/ou au moins l'une des deux parties d'étanchéité (29, 31) comportent une partie d'ancrage (39), et le couvercle (33) comporte une partie de réception (37) permettant la réception de cette partie d'ancrage (39).

4. Dispositif de couvercle (11) conforme à la revendication 3,
**caractérisé en ce que**
la partie de réception (37) du couvercle (33) a une forme dont la section diminue en direction du volume interne (19) du récipient (15), de préférence la forme d'un trapèze et/ou la partie d'ancrage (39) a une forme antagoniste correspondante s'amincissant en direction du volume interne (19) du récipient (15).

5. Dispositif de couvercle (11) conforme à l'une des revendications précédentes,
**caractérisé en ce que**
le dispositif de fermeture (49) comporte au moins un élément de fermeture (51) relié solidairement au récipient (15) pour permettre de fixer le couvercle (33) sur l'ouverture (13) et de bloquer la seconde partie d'étanchéité (31) entre la collerette (17) et le couvercle (33).

6. Dispositif de couvercle (11) conforme à la revendication 5,
**caractérisé en ce que**
l'élément de fermeture (51) comporte un étrier (53) pouvant être déplacé par pivotement hors de l'ouverture (13) et une partie de boulon (65) coopérant avec le couvercle (33) lorsque ce couvercle (33) est fixé sur l'ouverture (13).

7. Dispositif de couvercle (11) conforme à la revendication 6,
**caractérisé en ce que**
la partie de boulon (65) de l'élément de fermeture (51) comporte une partie à filetage externe (63) tandis que l'étrier (53) de l'élément de fermeture (51) comporte une partie à filetage interne (61), la partie à filetage externe (63) de la partie de boulon (65) venant en prise avec la partie à filetage interne (61) de l'étrier (53).

8. Dispositif de couvercle (11) conforme à l'une des revendications 2 à 7,
**caractérisé en ce que**
l'élément d'étanchéité (27) est réalisé en une seule pièce avec ses parties d'étanchéité (29, 31).

9. Dispositif de couvercle (11) conforme à l'une des revendications 2 à 8,
**caractérisé en ce que**
l'élément d'étanchéité (27) est réalisé en caoutchouc, en matière synthétique élastique ou en caoutchouc synthétique, en particulier en élastomère.
